# EUROPEAN PATENT APPLICATION

(11) **EP 1 087 580 A2**
(43) Date of publication of application: **28.03.2001**
(21) Application number: 00304567.1
(22) Date of filing: 30.05.2000
(51) Int. Cl.: H04L 12/64

(54) **Telephone system and circuitry**

(30) Priority: 16.09.1999 GB 9921962
(71) Applicant: NEC Corporation, Minato-ku, Tokyo 108-8001 (JP)
(72) Inventor: Manabe, Hisashi, NEC Europe Limited, London W3 6BL (GB)
(74) Representative: Abnett, Richard Charles

(57) **Abstract**

In a communications network (20) which uses packet switching, a conventional analogue line (10) is connected to a line card (22) which is of special form. The line card includes a conventional CODEC (26), but also includes a modem (28) and null-data handler (36). Either the CODEC, or the modem and null-data handler, can be selected by a switch (34). If a call is made from the subscriber terminal (12) to an Internet service provider (80), the CODEC is initially in circuit. On receipt of a call at the ISP's line card (82), a backward signal (90) is generated and transmitted through the network (20) to the calling party's line card (22), where it switches the modem (28) and null-data handler (36) into circuit instead of the CODEC. In this way null data which is necessary to keep the analogue line (10) open does not have to be transmitted through the network (20) to the called party.

## Description

### Background of the Invention

This invention relates to a telephone circuit for use with an analogue subscriber line for selectively transmitting voice or data.

A conventional telephone subscriber line is terminated at the local exchange on a line card, which includes a coder/decoder or CODEC which converts analogue signals from the subscriber's instrument to, typically, 64Kbit/s pulse code modulated (PCM) signals for propagation through the network. The output of the CODEC is applied to a circuit switch whence it is routed to the desired called party. There will generally be a line concentrator arrangement associated with the subscriber lines to reduce by a factor of typically 4 or 8 the number of ongoing lines compared with the number of subscriber lines, the concentrator being chosen to meet the peak anticipated requirement for the number of simultaneous conversations.

In order to send and receive data information over an analogue telephone subscriber line, typically a twisted pair of copper wires, it is well known to use a voice-frequency modulator and demodulator, called a MODEM. The modem is used for data transmission, and data received by the modem is converted into a form in which it can be transmitted over the public switched telephone network (PSTN) using voice frequencies. This voice frequency information is not then further modified in the PSTN, but will be converted by the CODEC in the line card to 64Kbit/s PCM just like voice signals from a conventional telephone instrument.

Analogue subscriber lines, in addition to the analogue voice frequency communication, transmit only a limited range of signals. These signals indicate: the subscriber telephone going off-hook, the telephone going on-hook, and dialled numbers, these comprising the digits 0 to 9 as well as the star (*) and hash (#) symbols. The same line may be used to transmit telephone or voice communication, facsimile, or modem data. The PSTN is not able to identify, from the limited signalling which can be transmitted over the analogue line, which of these three applications is in use by the subscriber at any time. Furthermore, the PSTN reserves a predetermined fixed bandwidth for data, for example the 64 Kbit/s continuous bitstream as indicated above. This bandwidth is chosen to provide good flexibility serving these three applications. However, the bandwidth is inefficient when the line is to be used for data which comes in bursts. Such data may be termed "bursty" data.

PSTNs have naturally been designed having regard to the characteristics and use of a conventional voice telephone instrument. For ordinary telephone use, the average holding time of calls from and to an analogue subscriber line is around just a few minutes. This average holding time is derived from mixed call conditions, including short calls such as calls which are abandoned due to the called party being busy or where there is no answer. The line concentrator in a conventional system is designed having regard to this type of usage. More recently however analogue subscriber lines have come to be used more and more for internet access, using a modem. When used for internet access, the average holding time of calls becomes considerably longer than the just a few minutes which has been the case in the past. The average is also boosted by there being a smaller number of calls abandoned (busy or no answer) than in the case of calls to human subscribers. This change in the manner of usage of residential subscriber lines can cause congestion, and degradation of the grade (quality) of service on the network. However, when used for internet access the actual amount of time for which the line is being used to transmit data, that is the effective data transmission time, is less than half of the overall holding time of the call. In these circumstances, in order to maintain the modem connection over the analogue line, the subscriber's computer, e.g. a personal computer, transmits null data, which is then transmitted through the modem and the PSTN to the modem at the called party, in this case the internet service provider's modem pool.

In general communications terms, an effective solution for dealing with bursty data applications is to employ packet multiplexing and packet switching. This packet technology is now also being planned for application to voice communications. This reflects the fact that data packet traffic is anticipated to be larger than voice traffic in the networks within the next few years. The output of the CODEC is then applied to a packet assembler and disassembler (PAD) which assembles the digits of the 64Kbit/s signal into packets for onward transmission through the telephone network, and conversely converts received packets from the network back to 64Kbit/s PCM code. Indeed, a new network, which we may term a public switched multimedia network (PSMN), has been proposed to handle integrated services comprising video voice and data for example. It is proposed that the PSMN will employ such packet-based technology.

However, this does not completely deal with the problem of null data transmission, because the majority of subscribers are still using conventional analogue subscriber lines, and are likely to do so for some time to come. The PSMN, like the PSTN, still cannot identify the application which is being used by the subscriber, whether it be telephone (voice) or internet access (data), due to the fact that no indication is given over the analogue subscriber line from the subscriber as to the type of application which is in use. Also it is not possible to determine from the voice-frequency output of the CODEC whether null data is being transmitted, due to the scrambling used in the subscriber's modem.

One solution to this problem would be for the network operator of the PSTN to specify a special dialling code which indicates data communications, and require subscribers to dial this special code before dialling up their Internet Service Provider (ISP). However, this would need a major re-numbering arrangement, which itself causes considerable expense and disruption, and may well not be acceptable.

### Summary of the Invention

We have appreciated that this transmission of null data, which represents inefficient usage of the network, could however be substantially reduced in a packet-switched network, by the incorporation of additional equipment.

The invention in its various aspects is defined in the independent claims appended to this description to which reference should now be made. Advantageous features are set forth in the appendant claims.

We have appreciated that there are two ways of identifying within the network that the application being used by the originating subscriber is a data communications application. These comprise a terminating network node, to which the called party is connected, can maintain and inspect a profile for the called party, and a mode in which the profile of the number being dialled can be checked elsewhere in the network at a number translation node. This will typically be at a service control point of the so-called Intelligent Network.

Either of these two methods can, therefore, be used to identify when data communication is taking place, and thereby identifying when null data suppression can be allowed. For example, all calls to an ISP's web server site can be assumed to be data communication calls. We have further appreciated that the fact that the call is a data call can then be communicated by a backward signal in the network to the originating node in the network, and used to improve the transmission efficiency through the network by deleting the null data from the network.

Backward signals through a telephone network are known for indicating answer to the call (off-hook of a called party) or release of the call (on-hook of the called party). Backward signals are also known for other information e.g. an ISDN line to indicate that the called party is a facsimile machine; this backward signal is not used in the network but is transmitted back to the originating subscriber, and is ignored when the calling party is an analogue line.

A preferred embodiment of the invention is described in more detail below with reference to the drawings. In this embodiment, the first of the above methods is adopted, although the second method could alternatively be employed. That is, at the called subscriber's termination, the fact that the called party has a data line is noted and transmitted back to the originating subscriber's termination at the local exchange.

In the preferred embodiment used in a packet switched network, the analogue subscriber's line is terminated at the exchange with a line interface card which includes a conventional coder/decoder (CODEC) and a packet assembler/disassembler (PAD). Additionally, however, the line interface card includes a modem which can be used instead of the CODEC to detect the signals received from the modem at the subscriber's apparatus over the analogue subscriber line and to convert the signals back into digital data. The modem is activated whenever a signal is received back from the called party's termination indicating that the called party receives only data. Thus the data is transmitted through the network as digital data, rather than as voice-frequency codes such as provided by the CODEC. The digital data will be efficiently transmitted by the packet switch especially when it is bursty. What is more, the modem will enable detection and removal of the null data which serves to keep the analogue line open in the absence of real data to be transmitted from or to the computer. To this end a null-data suppressor and inserter is included on the network side of the modem. This makes more efficient use of the network resources as there is no need to transmit unnecessary null data.

Silence suppression of digital voice, and null voice-frequency data suppression, are both known, but are different from null-data suppression. With silence of voice and null voice-frequency data suppression, the null data, which keeps the modem link to the subscriber open, is still transmitted as voice frequency over the network.

### BRIEF DESCRIPTION OF THE DRAWINGS

The invention will now be described in more detail by way of example with reference to the accompanying drawings, in which:
**Figure 1** is a block diagram illustrating the user network interface for an analogue subscriber line in a public switched multimedia network (PSMN), showing the arrangement when the subscriber dials an ISP;
**Figure 2** is an illustration similar to Figure 1 showing the arrangement when the subscriber makes a voice call;
**Figure 3** is a diagram similar to Figure 1 showing the arrangement when the subscriber makes a dial-up data call to the public switched telephone network (PSTN); and
**Figure 4** is a block diagram showing the construction of the line interface card shown in Figures 1 to 3.

### DETAILED DESCRIPTION OF THE PREFERRED EMBODIMENT

A preferred embodiment of the invention will now be described with reference to the drawings.

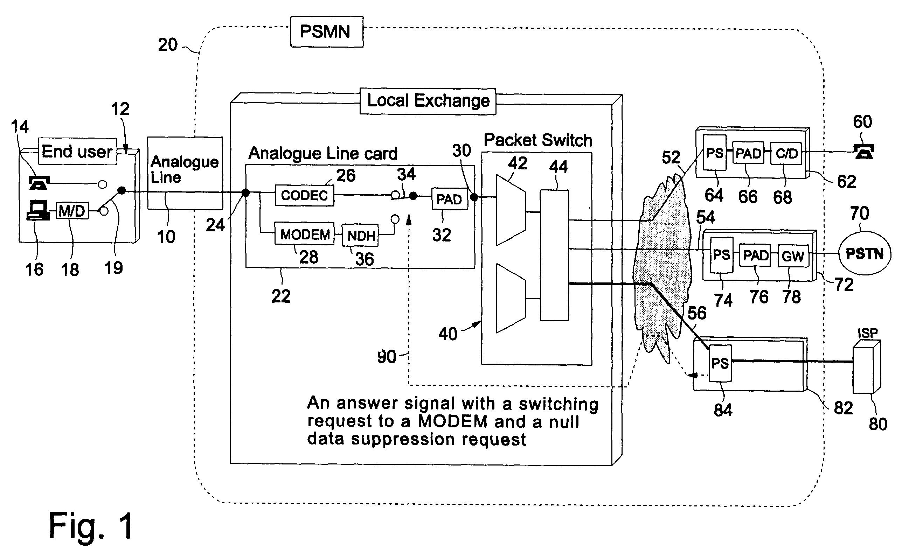

Referring first to Figure 1, an analogue subscriber line 10 is shown providing communications between a subscriber's terminal 12 and a public switched multimedia network (PSMN) 20. The subscriber terminal 12 includes a conventional telephone handset 14, and a computer or other digital data source 16. To the computer serial input/output port is connected a modem 18. A selector switch 19 selectively couples either the telephone handset 14 or the modem 18 to the analogue subscriber line 10 as desired for the particular form of communication in force at any time. However, it will be seen that no indication is given over the subscriber line as to which of the two applications is currently active, whether it be voice communication over the telephone, or data communication via the modem.

In this example, it is assumed that the analogue subscriber line uses voice-frequency modulation for data transmission.

At the PSMN 20, the analogue subscriber line 10 is terminated at a line interface card 22. The line interface card provides two paths. An input termination 24 is connected to the analogue subscriber line 10. To the line termination 24 is connected first a coder and decoder, or CODEC 26, and secondly a modulator and demodulator, or modem 28. The port 30 of the line interface card 22 on the network side is coupled to a packet assembler and disassembler, or PAD, 32 on the card 22. The PAD 32 is coupled to the CODEC 26 and modem 28 as follows. A selector switch 34 has its common terminal connected to the PAD 32, and its two other terminals connected respectively to the CODEC 26, and to a null-data handler or NDH 36. The NDH is then connected to the modem 28.

The CODEC 26 converts voice-frequency calls, whether voice calls or data calls from the modem, into a form appropriate for transmission through the network. As described above, in this instance this takes the form of a 64Kbit/s continuous bitstream.

Each line interface card 22 is coupled to a packet switch circuit 40 which is coupled to the port 30. A packet concentrator 42 is included at the input to the packet switch. A packet switch 44 receives the outputs of a number of packet concentrators. The packet switch 44, as shown, can connect with any of three selected types of remote node, namely an illustrative remote conventional telephone handset 60 connected directly to the PSMN 20, the public switched telephone network (PSTN) 70, such as an Internet service provider (ISP), and the direct data port 80 of an ISP. The connections are illustrated diagrammatically by lines 52, 54 and 56 respectively.

Each of the remote locations 60 and 70 has associated with it a respective line interface card. The line interface card 62 associated with the telephone handset 60 includes a packet switch 64, a packet assembler and disassembler 66, and a CODEC 68. This operates in similar fashion to the CODEC path of the line interface line 22.

The line interface card 72 associated with the public switched telephone network 70 likewise includes a packet switch 74 and a packet assembler and disassembler 76. It also includes a gateway (GW) circuit 78 of conventional form, to provide the interface between the PSMN, a packet switched network, and the PSTN, a circuit switched network. The gateway circuit 78 includes a CODEC and a signalling control unit to interwork with the Network Node Interface (NNI) signalling of the PSTN.

Finally, the line interface card 82 associated with the internet service provider 80 includes only a packet switch 84, as the ISP receives directly the packets which have been transmitted through the network. The internet service provider 80 will receive only data calls and will not receive voice calls on this number.

In accordance with this invention, when a call is received at line card 82 at the ISP 80, a backward signal or answer signal is provided by the line interface card 82 which is transmitted back to the line interface card 22 which terminates the originating analogue subscriber line 10. That is when a call is made by the subscriber to the ISP 80, the line interface card 82 is activated, and sends a signal 90 back through the network to the originating subscriber's line interface card 22. This signal indicates that the number which has been called by the originating subscriber is a data-only line. At the line interface card 22 this signal does two things. First of all it indicates to the line interface card 22 that the call must be a data call and not a voice call. This causes the switch 34 to be moved from the upper position where it connects the CODEC 26 to the PAD 32, to the lower position where it connects the modem 28 and null-data handler 36 to the PAD 32. Thus the data call passes through the modem 28, where the voice-frequency tones from the subscriber's modem 18 are converted back to digital data. Conversely, any digital data received by the modem 28 from the network side will be converted to voice-frequency tones for transmission over the analogue subscriber line 10 to the subscriber's terminal 12. During a data call, the PSMN network no longer has to transmit the relatively inefficient 64kbit/s PCM pulses, but instead can transmit the digital data.

When the line interface card 22 receives the backward signal from the called party and switches from the voice CODEC to the modem, it thus brings the null data handler 36 into circuit. Null data will be introduced by the computer 16 at the subscriber terminal 12, and will be converted by the modem 28 at the line interface card 22, but the null data handler 36 will now suppress the null data so that it does not need to be transmitted through the rest of the network. When, on the other hand, data is transmitted downstream from the ISP 80 to the calling subscriber, the null data handler 36 now inserts null data to maintain the modem connection over the analogue line 10.

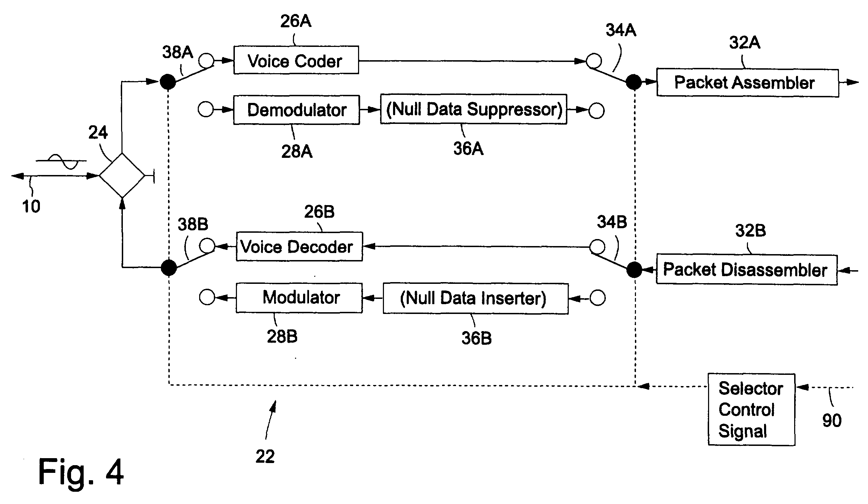

Figure 4 shows in a little more detail the construction of the line interface card 22, showing the upstream and downstream transmission paths separately. The analogue line 10 is coupled to the termination 24 and thence to an upstream voice coder 26A and an upstream modulator 28A, the output of which is applied to a null data suppressor 36A. A selector switch 34A selects either the output of the voice coder 26A or the output of the null data suppressor 36A and applies the selected output to a packet assembler 32A. Also included is a switch 38A which is operated in parallel with the switch 34A to couple the termination 24 selectively to the input of the voice coder 36A or the demodulator 28A as required.

The downstream path contains a packet disassembler 32B coupled to a selector switch 34B which selectively applies the output of the packet disassembler either to a voice decoder 26B or to a null data inserter 36B, the output of which is applied to a modulator 28B. Switch 38B selects either the output of the voice decoder 26B or the output of the modulator 28B for application to the termination 24 and hence to the analogue subscriber line 10. The null data inserter 36B operates when there is no received data to insert null data so as to keep the analogue line open and transmitting signals through the modem.

It will be appreciated that the voice coder 26A and voice decoder 26B together constitute the CODEC 26, that the demodulator 28A and modulator 28B together constitute the modem 28, and that the packet assembler 32A and packet disassembler 32B together constitute the packet assembler/disassembler 32.

The switches 34A, 34B, 38A and 38B are all operated in parallel in response to the selector control signal received on line 90, namely the backward signal derived from the line interface card 82 at the internet service provider 80.

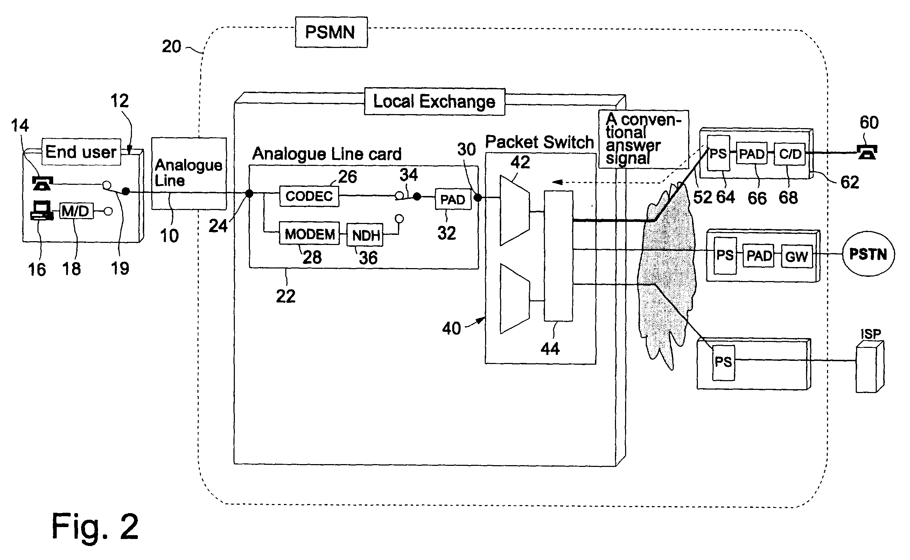

Figure 2 illustrates the system when not in data communication mode, and when the subscriber makes a call to the conventional telephone handset 50 connected to the PSMN 20. In this case, the modem 28 and null data handler 36 are not included in circuit, and the switch 34 shown in Figure 2 (and the corresponding associated switch 38 shown in Figure 4) connects the CODEC 26 in circuit instead. There is thus no data suppression. In this case a normal voice call can take place through the packet switched network and a normal answer signal is provided from the telephone handset 60.

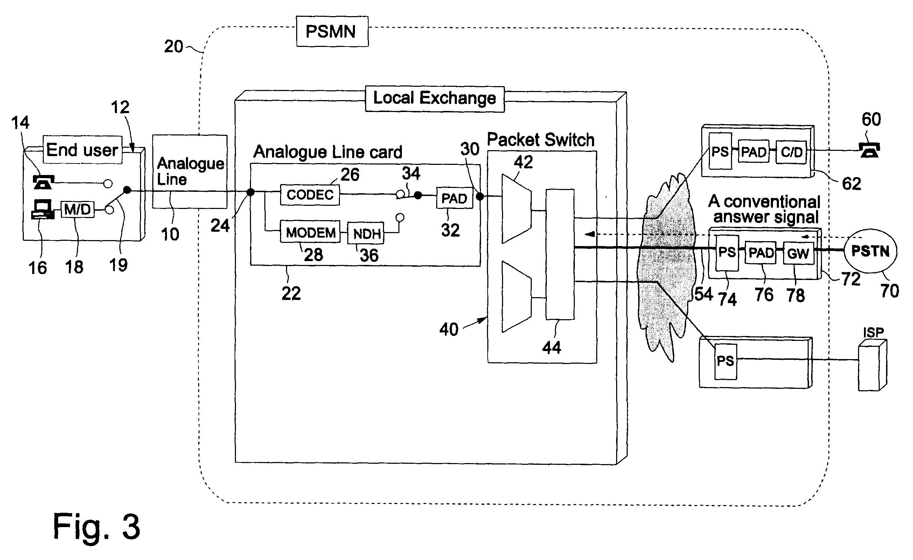

Figure 3 illustrates the situation when the subscriber uses dial-up access via the public switched telephone network, to a number which is not uniquely identified in the network as being a data line. In this circumstance, the improvement provided by the invention cannot be employed, and if the call is a data call the data is transmitted throughout the network as PCM generated by the CODEC 26 from the voice-frequency tones supplied by the subscriber's modem 18. Again, there is no null data suppression. A conventional answer signal is provided. The modem 28 and null data handler 36 at the subscriber's line interface card 22 are not used.

It will be seen from the foregoing description that the fact that a data call is taking place is identified by noting that the called party is a data-only line, and transmitting an appropriate answer signal back to the line interface card for the analogue subscriber line. In response to this signal, a modem incorporated on the subscriber's line interface card is used, together with a null data handler, to directly transmit digital data through the packet switch network and to reduce unnecessary null data transmission. This makes much more efficient use of the network.

In an alternative arrangement, instead of the signal for the subscriber's line interface card 22 being derived from the ISP's line interface card 82, it may be derived from an intermediate service control point in the intelligent network. This intermediate service control point checks all numbers as they are dialled and transmitted through the network, and when it identifies a called number as being associated with a data line, sends an answer signal which operates the line interface card 22 in the same way as the signal over line 90 shown in Figure 1. The intermediate service control point may for instance be a number translation node, such as the number translation node for toll-free telephone numbers.

When calls are made other than to a called party which is identified as a data communication line, the subscriber's line interface card 22 operates conventionally using the CODEC 26, this being the default setting for the line interface card 22.

## Claims

1. A telephone system comprising a plurality of subscriber analogue lines (10), a plurality of data-only subscriber lines (56), and network equipment (20) for selectively connecting the subscriber analogue lines (10) to the data-only subscriber lines (56), the network operating with packet-wise data transmission, each subscriber analogue line being terminated at the network equipment by respective line interface circuitry (22) and an associated packet switch (44) and each data-only subscriber line being terminated at the network equipment at least by a packet switch (84), characterised in that:
the line interface circuitry (22) for an analogue subscriber line (10) includes:
a modem (28) connected with its analogue side coupled to the subscriber line (10);
a null data suppresser/inserter (36) connected to the digital side of the modem for suppressing null data during transmission from the line to the network and inserting null data during transmission over the analogue line from the network to the subscriber; and
switching means (34) for selectively connecting the modem (28) in circuit in the line; and
the system includes means (82) for identifying data-only subscriber lines (56) as data-only lines and for transmitting a backward signal (90) through the network to the line interface circuitry (22) for the analogue subscriber line, such that the switching means (34) connects the modem (28) and the null data suppresser/inserter (36) in circuit when the called number is identified as a data-only line.

2. A system according to claim 1, in which the means for identifying data-only subscriber lines as data-only lines is located at the line interface card (82) of a data-only subscriber line (56).

3. A system according to claim 1, in which the means for identifying data-only subscriber lines (56) as data-only lines is located at an intermediate node in the network (20).

4. A system according to any of claims 1 to 3, further comprising a packet switch (44,64,74,84) at each of the line interface circuits (22,62,72,82)for connecting the line interface circuit to the network.

5. A system according to any of claims 1 to 4, in which each analogue subscriber line interface circuit (22) additionally includes a voice-frequency coder/decoder (26), and in which the switching means (34) selectively connects either the coder/decoder (26) or the modem (28) in circuit between the analogue subscriber line (10) and the network (20).

6. A system according to claim 5, in which each analogue subscriber line interface circuit (22) provides separate upstream and downstream paths, the upstream path comprising a voice coder (26A), and a demodulator (28A) in series with a null-data suppressor (36A); and the downstream path comprising a voice decoder (26B), and a null-data inserter (36B) in series with a modulator (28B).

7. A line interface circuit for use in a telephone system which comprises a plurality of subscriber analogue lines (10), a plurality of data-only subscriber lines (56), and network equipment (20) for selectively connecting the subscriber analogue lines to the data-only subscriber lines, the line interface circuit (22) comprising:
a line terminal (24) for connection to an analogue subscriber line;
a network terminal (30) for connection to a telephone network;
a voice-frequency coder/decoder (26);
a modem (28) and a null-data suppresser/inserter (36) for suppressing null data during transmission from the line to the network and inserting null data during transmission over the analogue line from the network to the subscriber; and
switching means (34) for selectively connecting either the coder/decoder (26) or the series circuit comprising the modem (28) and the null data suppresser/inserter in circuit between the line terminal (24) and the network terminal (30), the switching means (34) being actuable in response to a backward signal (90) from the network which indicates that the subscriber is in communication with a called party via a data-only line (56).

8. A circuit according to claim 7, further comprising a packet switch (44,64,74,84) at each of the line interface circuits (22,62,72,82) for connecting the line interface circuit to the network terminal.

9. A circuit according to claim 7 or 8, in which the analogue subscriber line interface circuit (22) provides separate upstream and downstream paths, the upstream path comprising a voice coder (26A), and a demodulator (28A) in series with a null-data suppressor (36A); and the downstream path comprising a voice decoder (26B), and a null-data inserter (36B) in series with a modulator (28B).

10. A communications network termination interface for connecting a computer to communications network equipment, the interface comprising:
a line side termination for connection to a line to a computer;
a network side termination for connection to the network equipment;
and a packet switch (84) coupled between the line side termination and the network side termination;
and further comprising, associated with the interface:
backward signal generating means for generating a backward signal (90) for transmission through the network equipment (20), the backward signal indicating that the interface is associated with a data-only line.
